# EUROPEAN PATENT APPLICATION

(11) **EP 2 772 334 A2**
(43) Date of publication of application: **03.09.2014**
(21) Application number: 14156864.2
(22) Date of filing: 26.02.2014
(51) Int. Cl.: B23K 37/02, G21C 17/017, G21C 19/20

(54) **Weld portion repairing method and weld portion repairing apparatus**

(30) Priority: 27.02.2013 JP 2013037609
(71) Applicant: MITSUBISHI HEAVY INDUSTRIES, LTD., Tokyo 108-8215 (JP)
(72) Inventor: Yamaguchi, Takehiko, Tokyo 108-8215 (JP); Shichida, Tomonori, Tokyo 108-8215 (JP); Kawase, Naoto, Tokyo 108-8215 (JP)
(74) Representative: Intès, Didier Gérard André

(57) **Abstract**

A weld portion repairing method for repairing a weld portion (122) provided on a nuclear power plant includes: determining a weld boundary position (α) on the weld portion (122) using a detection signal of a flaw detection sensor; setting a repair range (WC) with reference to the weld boundary position (α); and repairing the repair range (WC).

## Description

### Field

The present invention relates to a weld portion repairing method and a weld portion repairing apparatus that repair a weld portion.

### Background

For example, in a nuclear power plant equipped with a pressurized water reactor (PWR), light water as primary cooling water is used as a nuclear reactor primary coolant and a neutron moderator, the light water is turned into high-temperature and high-pressure water that is not boiled for the entire reactor internal, the high-temperature and high-pressure water is delivered to a steam generator for generating steam by heat exchange, and the steam is delivered to a turbine generator for generating power.

In such a nuclear power plant, it is necessary to inspect a pressurized water reactor on various structures, for example, on a regular basis in order to secure sufficient safety and reliability. In the case where a problem is found through inspections, necessary portions related to the problem are repaired. For example, in the pressurized water reactor, a nuclear reactor vessel main body is provided with an outlet-side nozzle that supplies primary cooling water to the steam generator and an inlet-side nozzle that takes in primary cooling water subjected to heat exchange at the steam generator. On the other hand, the steam generator is provided with an inlet-side nozzle that takes the primary cooling water supplied from the nuclear reactor in a channel head and an outlet-side nozzle that returns the primary cooling water subjected to heat exchange to the nuclear reactor. In the nuclear reactor and the steam generator, the inlet-side nozzle is joined to exchange to the nuclear reactor. In the nuclear reactor and the steam generator, the inlet-side nozzle is joined to the outlet-side nozzle through a primary cooling water pipe. Since the materials are different as the nozzles are made of low-alloy steel and the primary cooling water pipe is made of stainless steel, a stainless steel safe-end pipe is disposed between the nozzles and the primary cooling water pipe. A weld portion joins the nozzle to the safe-end pipe, a buttering weld portion is provided on the groove on the nozzle side, and an overlay weld portion is provided on the inner surface from the buttering weld portion to the nozzle side. The weld portion between the nozzle and the safe-end pipe is inspected on a regular basis, and is repaired as necessary.

For example, in a method and apparatus for cutting the nozzle inner surface of a nuclear vessel described in Patent Literature 1, in the case where a surface defect such as a crack is found on the weld portion of a nozzle because of aged deterioration, a cutting apparatus is inserted into the nozzle and positioned at a cutting position, and then the weld portion is cut. Patent Literature 1 describes that in cutting, the cutting position is determined using an eddy current flaw detector sensor, an inner surface form of the nozzle is recorded using a displacement detector sensor, and the inner surface of the nozzle is cut based on these items of data.

Moreover, an eddy current flaw detector and an eddy current flaw detection method described in Patent Literature 2 describe that the detector includes an eddy current flaw detection probe, a magnetic saturation eddy current flaw detection probe that includes a magnet and reduces noise caused by changes in permeability, and an analyzing unit that compares and analyzes signal waveforms obtained by scanning the same location using the eddy current flaw detection probe and the magnetic saturation eddy current flaw detection probe and determines whether the signal waveforms are caused by a flow of a sample that is a measurement object or caused by noise. Furthermore, in the eddy current flaw detector and the eddy current flaw detection method described in Patent Literature 2, the analyzing unit determines the position of a different material weld boundary that is a boundary between different materials on the sample that is a measurement object based on the signal value distribution of the sample using the magnetic saturation eddy current flaw detection probe, and extracts and sizes a defect according to the signal waveform of the eddy current flaw detection probe or the magnetic saturation eddy current flaw detection probe based on the different material weld boundary position.

### Citation List

### Patent Literature

Patent Literature 1: Japanese Laid-open Patent Publication No. 2006-349596
Patent Literature 2: Japanese Laid-open Patent Publication No. 2008-309573

### Summary

### Technical Problem

As described in Patent Literature 2, it is known that the weld boundary position is determined and eddy current flaw detection inspection is performed based on the weld boundary position. However, also in repairing as in Patent Literature 1, it is necessary to set a range for inspection, and it is desired to set a repair range according to criteria related to inspection for repairing an accurate position.

The present invention is to solve the problems, and it is an object to provide a weld portion repairing method and a weld portion repairing apparatus that can appropriately set a repair range and repair a weld portion. Solution to Problem

According to an aspect of the present invention, a weld portion repairing method for repairing a weld portion provided on a nuclear power plant includes: determining a weld boundary position on the weld portion using a detection signal of a flaw detection sensor; setting a repair range with reference to the weld boundary position; and repairing the repair range.

According to the weld portion repairing method, the repair range is set with reference to the weld boundary position determined using the flaw detection sensor, so that it is possible to perform accurate repairing.

According to another aspect of the present invention, a weld portion repairing method for repairing a weld portion provided on a nuclear power plant includes: determining a weld boundary position on the weld portion using a detection signal of a flaw detection sensor; setting a flaw detection inspection range using the flaw detection sensor with reference to the weld boundary position; inspecting the flaw detection inspection range using the flaw detection sensor; setting a repair range on the repair location subjected to inspection with reference to the weld boundary position; and repairing the repair range.

According to the weld portion repairing method, the flaw detection inspection range and the repair range are set with reference to the weld boundary position determined by flaw detection inspection, so that it is possible to perform accurate flaw detection inspection and repairing with no displacement between both of the ranges. As described above, in accordance with the weld portion repairing method according to the present invention, it is possible to set both of the ranges according to the criteria involved in both of inspection and repairing and to inspect and repair the weld portion.

Advantageously, the weld portion repairing method further includes: setting a visual inspection range using an imaging sensor with reference to the weld boundary position; and inspecting the visual inspection range using the imaging sensor.

According to the weld portion repairing method, the visual inspection range is set with reference to the weld boundary position determined by flaw detection inspection, so that it is possible to perform accurate visual inspection also in visual inspection with no displacement in the flaw detection inspection range or in the repair range.

Advantageously, in the weld portion repairing method, the weld portion is a different material weld portion in which different weld materials are joined so as to weld different materials together.

Since the surface of the different material weld portion is machined, it is difficult to determine a different material weld boundary position by visual confirmation. Therefore, the different material weld boundary position is detected using the flaw detection sensor, so that it is possible to accurately detect the different material weld boundary position.

According to still another aspect of the present invention, a weld portion repairing apparatus for repairing a weld portion provided on a nuclear power plant includes: an apparatus frame disposed at a position of the weld portion; a flaw detection sensor provided on the apparatus frame; a repairing unit provided on the apparatus frame and configured to repair the weld portion; and a control unit configured to control determining a weld boundary position on the weld portion using a detection signal of the flaw detection sensor, setting a repair range with reference to the weld boundary position, and repairing the repair range using the repairing unit.

According to the weld portion repairing apparatus, the repair range is set with reference to the weld boundary position determined using the flaw detection sensor, so that it is possible to perform accurate repairing.

According to still another aspect of the present invention, a weld portion repairing apparatus for repairing a weld portion provided on a nuclear power plant includes: an apparatus frame disposed at a position of the weld portion; an inspecting unit provided on the apparatus frame and configured to perform flaw detection inspection on the weld portion using a flaw detection sensor; a repairing unit provided on the apparatus frame and configured to repair a repair location subjected to flaw detection inspection using the inspecting unit; and a control unit configured to control determining a weld boundary position on the weld portion using a detection signal of the flaw detection sensor of the inspecting unit, setting a flaw detection inspection range using the flaw detection sensor with reference to weld boundary position, subjecting the flaw detection inspection range to flaw detection inspection using the flaw detection sensor, setting a repair range on the repair location subjected to flaw detection inspection with reference to the weld boundary position, and repairing the repair range using the repairing unit.

According to the weld portion repairing apparatus, the flaw detection inspection range and the repair range are set with reference to the weld boundary position determined by flaw detection inspection, so that it is possible to perform accurate flaw detection inspection and repairing with no displacement between both of the ranges. As described above, in accordance with the weld portion repairing apparatus according to the present invention, it is possible to set both of the ranges according to the criteria involved in both of inspection and repairing and to inspect and repair the weld portion.

Advantageously, in the weld portion repairing apparatus, the inspecting unit includes an imaging sensor configured to perform visual inspection on the weld portion, and the control unit controls setting a visual inspection range using the imaging sensor with reference to the weld boundary position and subjecting the visual inspection range to visual inspection using the imaging sensor.

According to the weld portion repairing apparatus, the visual inspection range is set with reference to the weld boundary position determined by flaw detection inspection, so that it is possible to perform accurate visual inspection also in visual inspection with no displacement in the flaw detection inspection range or in the repair range.

### Advantageous Effects of Invention

According to the present invention, it is possible to appropriately set a repair range and to repair a weld portion.

### Brief Description of Drawings

FIG. 1 is a schematic block diagram of an exemplary nuclear power plant;
FIG. 2 is a cross sectional view of a weld portion in the nuclear power plant;
FIG. 3 is a schematic diagram of an installed state of a weld portion repairing apparatus according to an embodiment of the present invention;
FIG. 4 is a cross sectional side view of the weld portion repairing apparatus according to the embodiment of the present invention;
FIG. 5 is a cross sectional side view of another use form of the weld portion repairing apparatus according to the embodiment of the present invention;
FIG. 6 is a plan view of the weld portion repairing apparatus according to the embodiment of the present invention;
FIG. 7 is a cross sectional view taken along line A-A in FIGS. 4 and 6;
FIG. 8 is a cross sectional view taken along line B-B in FIG. 5;
FIG. 9 is a cross sectional view taken along line C-C in FIG. 4;
FIG. 10 is a diagram seen from arrow D-D in FIG. 4;
FIG. 11 is a diagram seen from arrow E-E in FIG. 4;
FIG. 12 is a block diagram of a control unit of the weld portion repairing apparatus according to the embodiment of the present invention;
FIG. 13 is a schematic diagram of inspection procedures performed by the weld portion repairing apparatus according to the embodiment of the present invention;
FIG. 14 is a schematic diagram of inspection procedures performed by the weld portion repairing apparatus according to the embodiment of the present invention;
FIG. 15 is a schematic diagram of inspection procedures performed by the weld portion repairing apparatus according to the embodiment of the present invention;
FIG. 16 is a schematic diagram of inspection procedures performed by the weld portion repairing apparatus according to the embodiment of the present invention; and
FIG. 17 is a schematic diagram of inspection procedures performed by the weld portion repairing apparatus according to the embodiment of the present invention.

### Description of Embodiments

In the following, an embodiment of the present invention will be described in detail with reference to the drawings. It is noted that the present invention is not limited to this embodiment. Moreover, components in the embodiment below include ones easily replaceable by a person skilled in the art or ones substantially the same.

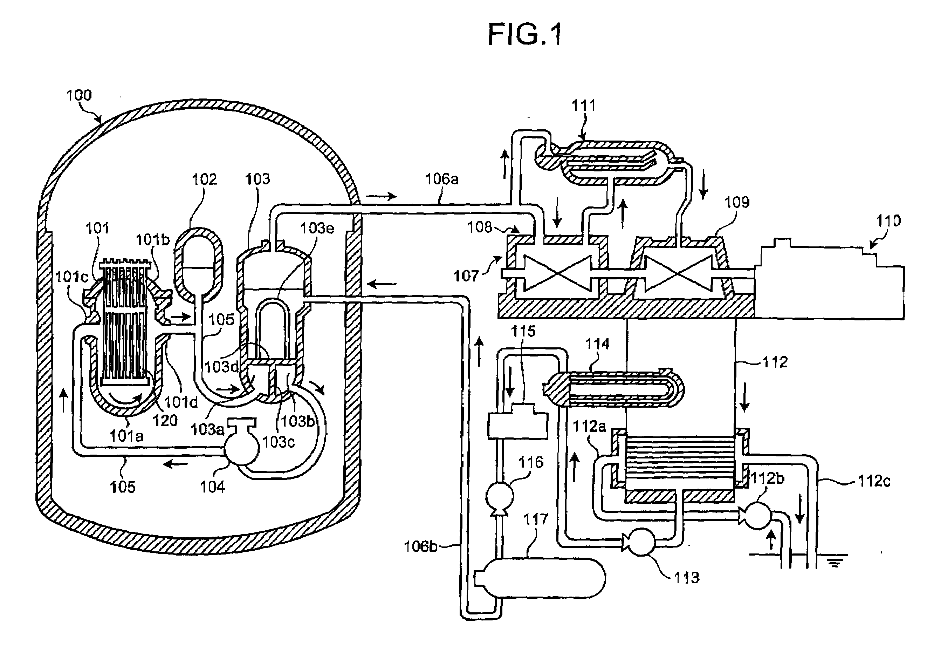

FIG. 1 is a schematic block diagram of an exemplary nuclear power plant. A nuclear power plant illustrated in FIG. 1 includes a pressurized water reactor (PWR). In the nuclear power plant, the circulation passage of primary cooling water is configured in which a nuclear reactor vessel 101, a pressurizer 102, a steam generator 103, and a primary cooling water pump 104 of the pressurized water reactor are in turn connected through a primary cooling water pipe 105 in a containment 100.

The nuclear reactor vessel 101 is a vessel that houses a fuel assembly 120 in an enclosed state in the inside of the nuclear reactor vessel 101, which is configured of a nuclear reactor vessel main body 101a and a reactor vessel cover 101b mounted on the upper part of the nuclear reactor vessel main body 101a for inserting and removing the fuel assembly 120. An inlet-side nozzle 101c and an outlet-side nozzle 101d that supply and discharge light water as primary cooling water are provided on the upper part of the nuclear reactor vessel main body 101a. The primary cooling water pipe 105 is connected to the outlet-side nozzle 101d so as to communicate with an inlet-side channel head 103a of the steam generator 103. Moreover, the primary cooling water pipe 105 is connected to the inlet-side nozzle 101c so as to communicate with an outlet-side channel head 103b of the steam generator 103.

In the lower part formed in a hemispherical shape of the steam generator 103, the inlet-side channel head 103a and the outlet-side channel head 103b are provided as partitioned by a partition plate 103c. The inlet-side channel head 103a and the outlet-side channel head 103b are partitioned from the upper side of the steam generator 103 by a tube sheet 103d provided on the ceiling portion of the inlet-side channel head 103a and the outlet-side channel head 103b. A heat-transfer pipe 103e in an inverted U-shape is provided on the upper side of the steam generator 103. The end portion of the heat-transfer pipe 103e is supported on the tube sheet 103d so as to connect the inlet-side channel head 103a to the outlet-side channel head 103b. The primary cooling water pipe 105 on the inlet side is connected to the inlet-side nozzle of the inlet-side channel head 103a, and the primary cooling water pipe 105 on the outlet side is connected to the outlet-side nozzle of the outlet-side channel head 103b. Moreover, to the steam generator 103, a secondary cooling water pipe 106a on the outlet side is connected to the top end on the upper side partitioned by the tube sheet 103d, and a secondary cooling water pipe 106b on the inlet side is connected to the side on the upper side.

Furthermore, in the nuclear power plant, the circulation passage of the secondary cooling water is configured in which the steam generator 103 is connected to a steam turbine 107 through the secondary cooling water pipes 106a and 106b on the outside of the containment 100.

The steam turbine 107 includes a high-pressure turbine 108 and a low-pressure turbine 109, and a power generator 110 is connected to the steam turbine 107. Moreover, a moisture separator heater 111 is connected to the high-pressure turbine 108 and the low-pressure turbine 109 as branched from the secondary cooling water pipe 106a. Furthermore, the low-pressure turbine 109 is connected to a condenser 112. The condenser 112 is connected to the secondary cooling water pipe 106b. As described above, the secondary cooling water pipe 106b is connected to the steam generator 103, goes from the condenser 112 to the steam generator 103, and is provided with a condensate pump 113, a low-pressure feed water heater 114, a deaerator 115, a main feed water pump 116, and a high-pressure feed water heater 117.

Therefore, in the nuclear power plant, primary cooling water is heated at the nuclear reactor vessel 101, the temperature and pressure are increased high, and the primary cooling water is pressurized at the pressurizer 102, and supplied to the steam generator 103 through the primary cooling water pipe 105 while maintaining a constant pressure. In the steam generator 103, heat is exchanged between the primary cooling water and the secondary cooling water, and the secondary cooling water is evaporated to be steam. The cooled primary cooling water after heat exchange is recovered on the primary cooling water pump 104 side through the primary cooling water pipe 105, and returned to the nuclear reactor vessel 101. On the other hand, the secondary cooling water to be steam by heat exchange is supplied to the steam turbine 107. The steam is in the steam turbine 107, and the moisture separator heater 111 removes moisture from the exhaust air from the high-pressure turbine 108, further heats the exhaust air to be in an overheated state, and then delivers the exhaust air to the low-pressure turbine 109. The steam turbine 107 is driven by the steam of the secondary cooling water, and the power is transmitted to the power generator 110 for generating electric power. The steam used for driving the turbine is discharged to the condenser 112. The condenser 112 exchanges heat between the cooling water (seawater, for example) taken using a pump 112b through an intake pipe 112a and the steam discharged from the low-pressure turbine 109, condenses the steam, and returns the steam into a saturated liquid at a low pressure. The cooling water used for heat exchange is discharged from a drain pipe 112c. Moreover, the condensed saturated liquid is turned into secondary cooling water, and the condensate pump 113 delivers the secondary cooling water to the outside of the condenser 112 through the secondary cooling water pipe 106b. Furthermore, the secondary cooling water passing through the secondary cooling water pipe 106b is heated with low-pressure steam bled from the low-pressure turbine 109, for example, at the low-pressure feed water heater 114, impurities such as dissolved oxygen or non-condensable gas (ammonia gas) are removed from the secondary cooling water at the deaerator 115, the secondary cooling water is delivered using the main feed water pump 116, heated with high pressure steam bled from the high-pressure turbine 108, for example, at the high-pressure feed water heater 117, and returned to the steam generator 103.

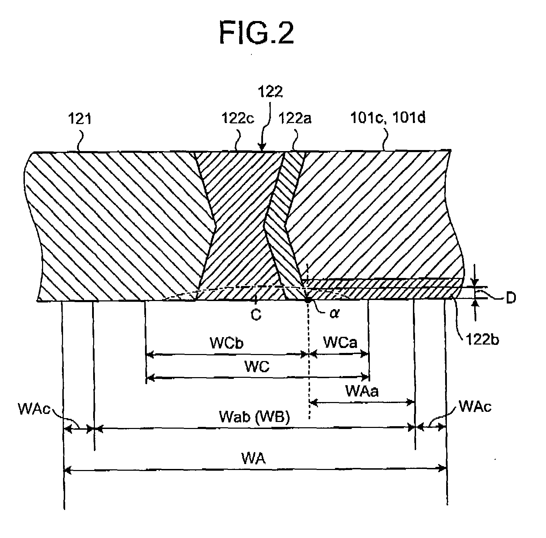

FIG. 2 is a cross sectional view of a weld portion in the nuclear power plant. In the pressurized water reactor of the nuclear power plant, in the nuclear reactor vessel 101, the primary cooling water pipe 105 is connected to the inlet-side nozzle 101c and the outlet-side nozzle 101d as described above. Since the materials are different between the inlet-side nozzle 101c, the outlet-side nozzle 101d, and the primary cooling water pipe 105, a safe-end pipe 121 is connected between them through a weld portion 122. Moreover, similarly, in the steam generator 103, the primary cooling water pipe 105 is connected to the inlet-side nozzle of the inlet-side channel head 103a and the outlet-side nozzle of the outlet-side channel head 103b as described above. Since the materials are different between the inlet-side nozzle of the inlet-side channel head 103a, the outlet-side nozzle of the outlet-side channel head 103b, and the primary cooling water pipe 105, a safe-end pipe is connected between them through a weld portion 122.

More specifically, since the nozzles 101c and 101d are made of low-alloy steel and the primary cooling water pipe 105 is made of stainless steel, which are made of different materials, the safe-end pipe 121 made of stainless steel is disposed between them as illustrated in FIG. 2. The nozzles 101c and 101d are connected to the safe-end pipe 121 with the weld portion 122 that is a different material weld portion. The weld portion 122 is applied with a buttering weld portion 122a made of low-alloy steel on the groove on the nozzle 101c side and the nozzle 101d side, and an overlay weld portion 122b made of low-carbon austenitic stainless steel is applied from the buttering weld portion 122a to the inner surface on the nozzle 101c side and the nozzle 101d side. A final weld portion 122c made of a nickel base alloy (Inconel (registered trademark), for example) is applied between the groove on the safe-end pipe 121 side and the buttering weld portion 122a to connect the nozzles 101c and 101d to the safe-end pipe 121. As described above, the weld portion 122 in FIG. 2 is a different material weld portion in which different weld materials (the buttering weld portion 122a, the overlay weld portion 122b, and the final weld portion 122c) are joined together so as to weld different materials (the nozzles 101c and 101d and the primary cooling water pipe 105) together. In the different material weld portion, it is difficult to determine a different material weld boundary position by visual confirmation because the surface (the inner surface) is machined.

It is likely that tensile stress remains in this weld portion 122 and the portion therearound, and it is necessary to relax the stress. Therefore, a water jet peening apparatus as a weld portion repairing apparatus improves tensile residual stress on the weld portion 122 to be a target and the inner surfaces of the nozzles 101c and 101d, which are the portion around the weld portion 122, to compressive residual stress, so that stress corrosion cracks are to be prevented. The water jet peening apparatus is an apparatus that injects high-pressure water including cavitation bubbles onto metal member surfaces in water and improves tensile residual stress on the metal member surfaces to compressive residual stress.

In the case where the water jet peening apparatus improves tensile residual stress on the weld portion 122 and the inner surfaces of the nozzles 101c and 101d, which are the portion around the weld portion 122, to compressive residual stress, the water jet peening apparatus is inserted into the nozzles 101c and 101d for operation. Moreover, in the case of performing water jet peening, the processed surface is inspected in order to identify a position on the processed surface at which a water jet is injected.

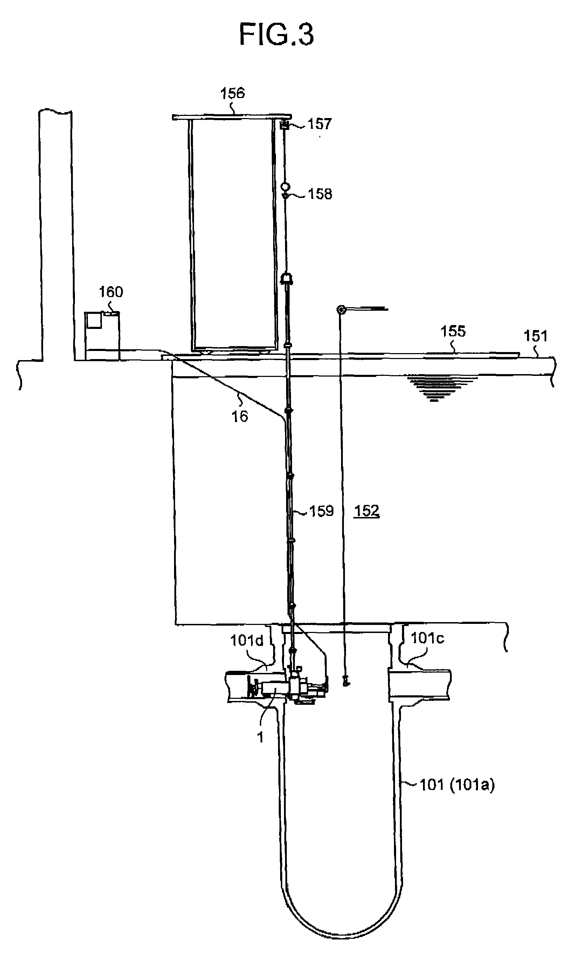

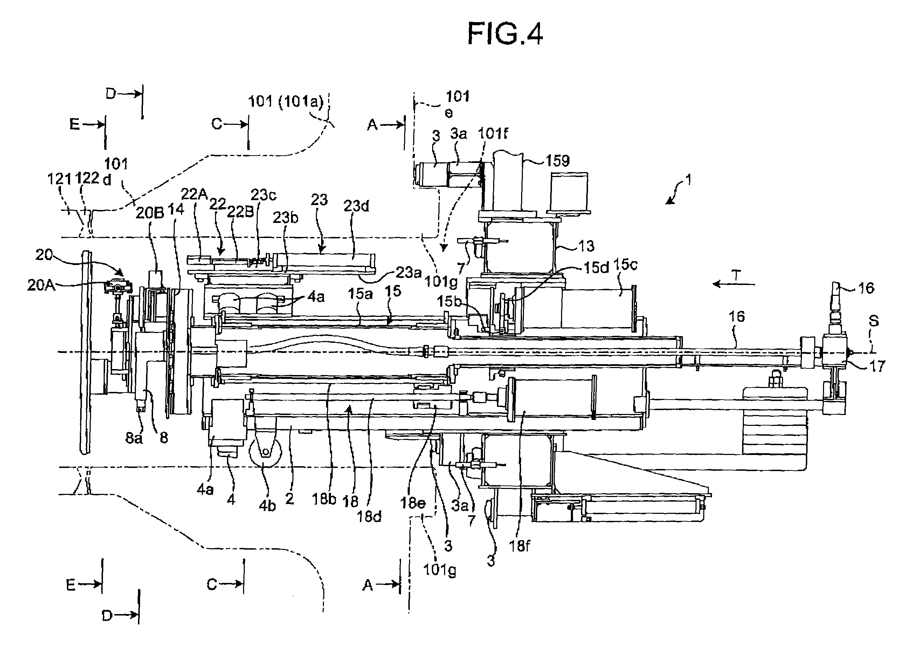

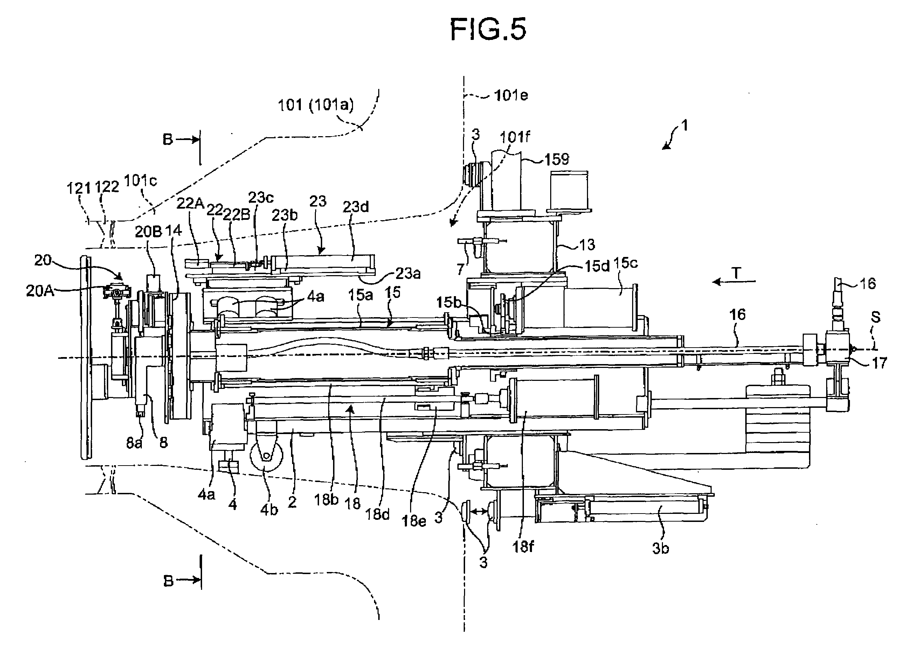

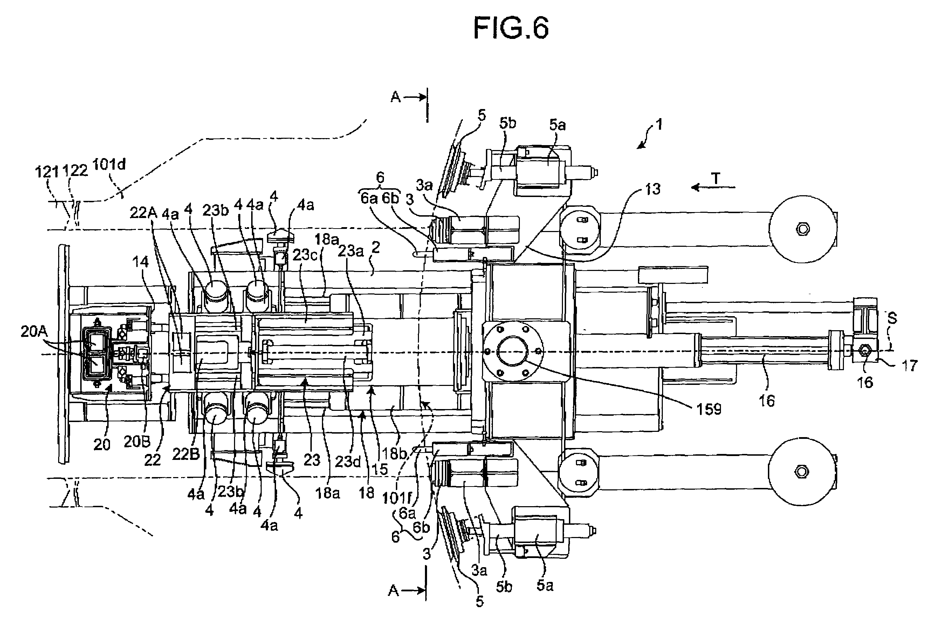

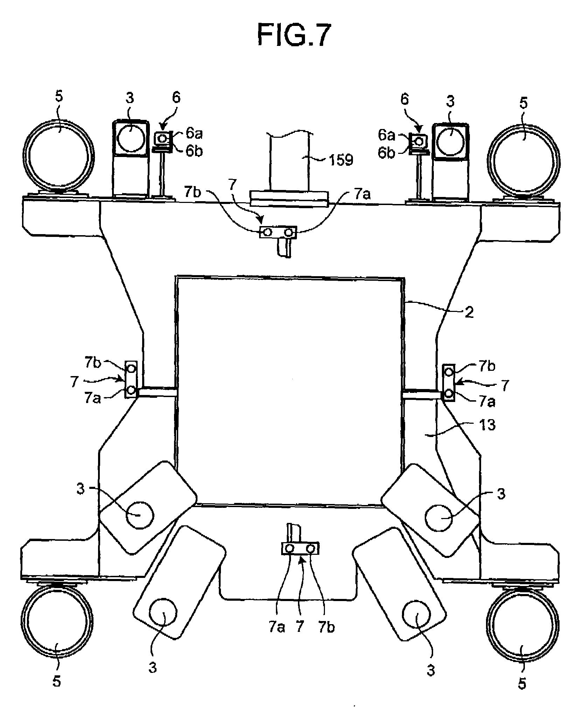

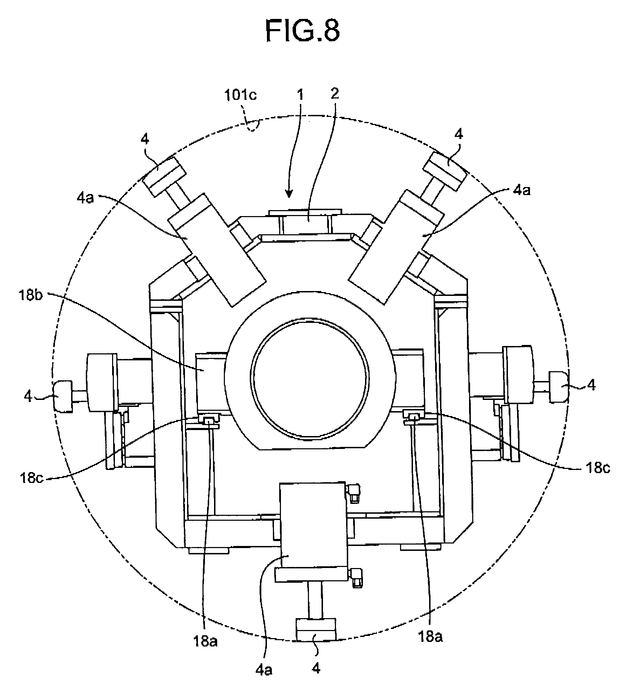

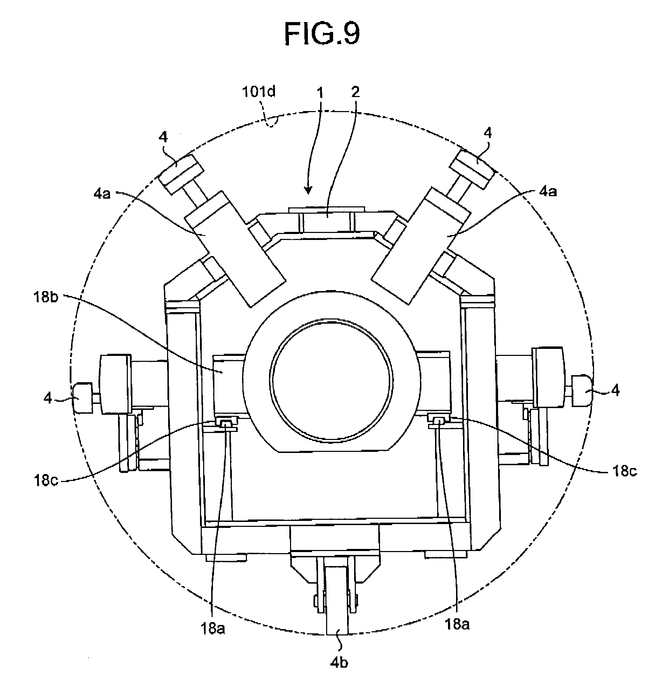

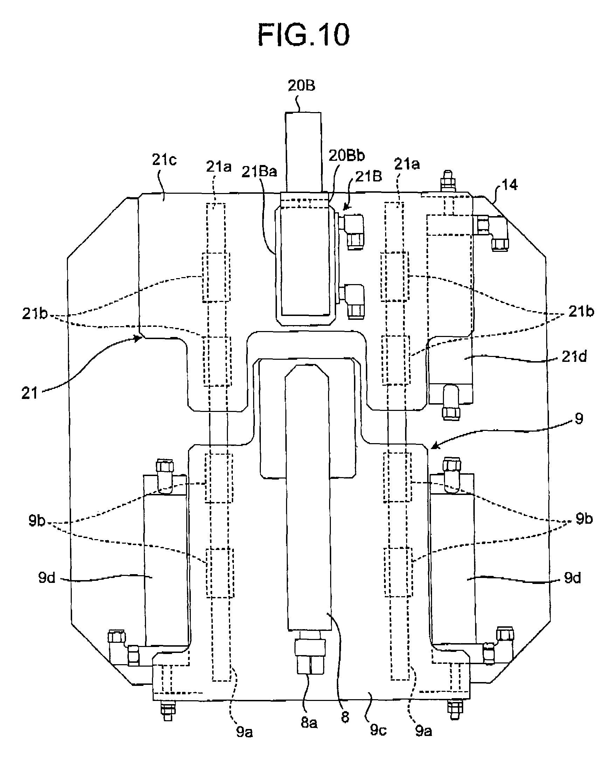

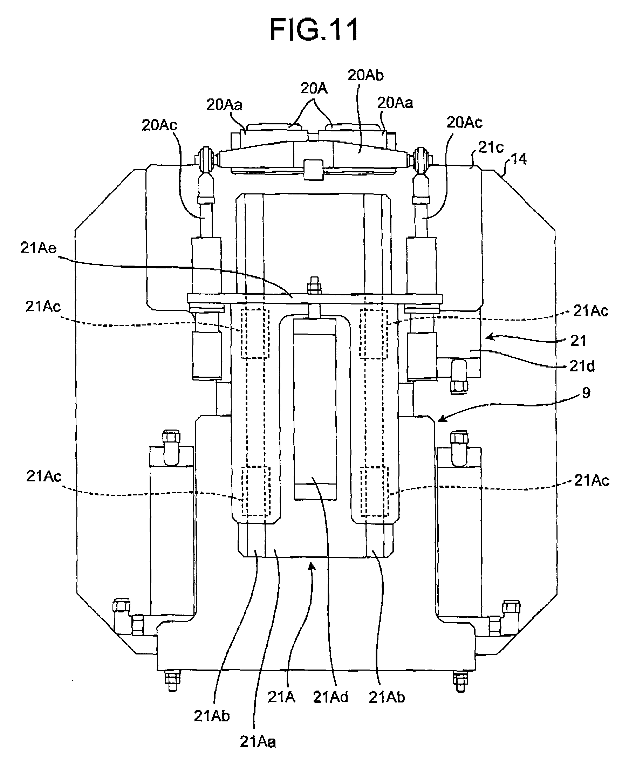

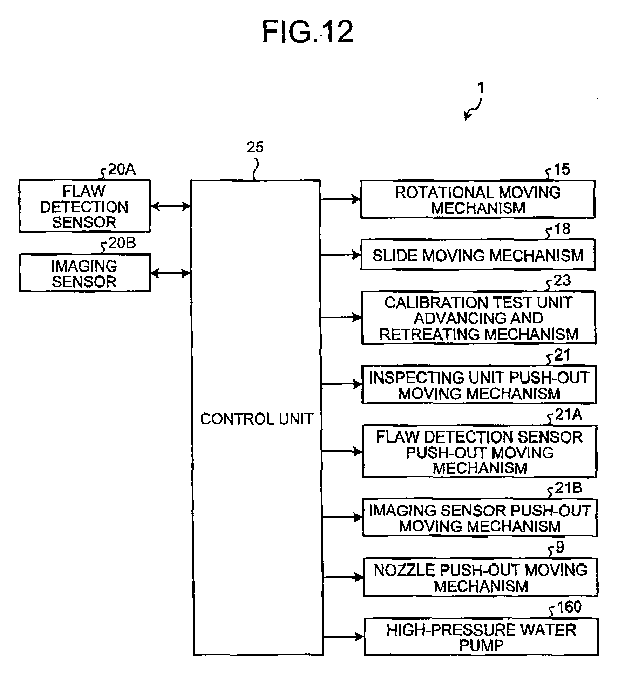

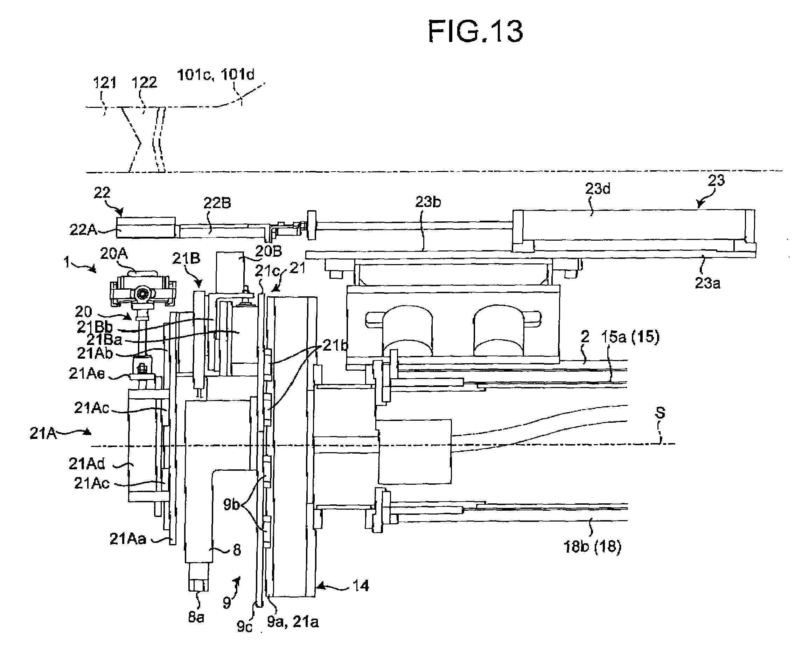

FIG. 3 is a schematic diagram of an installed state of the weld portion repairing apparatus according to the embodiment. FIG. 4 is a cross sectional side view of the weld portion repairing apparatus according to the embodiment. FIG. 5 is a cross sectional side view of another use form of the weld portion repairing apparatus according to the embodiment. FIG. 6 is a plan view of the weld portion repairing apparatus according to the embodiment. FIG. 7 is a cross sectional view taken along line A-A in FIGS. 4 and 6. FIG. 8 is a cross sectional view taken along line B-B in FIG. 5. FIG. 9 is a cross sectional view taken along line C-C in FIG. 4. FIG. 10 is a diagram seen from arrow D-D in FIG. 4. FIG. 11 is a diagram seen from arrow E-E in FIG. 4. FIG. 12 is a block diagram of the control unit of the weld portion repairing apparatus according to the embodiment. FIGS. 13 to 17 are schematic diagrams of inspection procedures performed by the weld portion repairing apparatus according to the embodiment.

As illustrated in FIG. 3, a weld portion repairing apparatus (a water jet peening apparatus) 1 is installed as inserted into the inlet-side nozzle 101c and the outlet-side nozzle 101d, which are objects to be repaired, of the nuclear reactor vessel 101 (the nuclear reactor vessel main body 101a). It is noted that in the embodiment, for the object to be repaired, which is repaired by the weld portion repairing apparatus 1, the inlet-side nozzle 101c and the outlet-side nozzle 101d of the nuclear reactor vessel 101 are taken as examples, but the examples are not limited thereto.

Moreover, in the nuclear power plant, a nuclear reactor building (not illustrated in the drawings) is provided with a work floor 151, a cavity 152 is provided below the work floor 151, and cooling water is stored in this cavity 152. The nuclear reactor vessel 101 is disposed in the cavity 152, and hung down and supported. In the nuclear reactor building, a pair of parallel guide rails 155 is laid on both sides of the cavity 152, and a mobile crane 156 is movably supported. The mobile crane 156 is movable in one direction in the horizontal direction (in the lateral direction in FIG. 3), and an electric hoist 157 is provided, which is movable in the other direction crossing (orthogonal to) one direction in the horizontal direction (in the orthogonal direction on the paper in FIG. 3). The electric hoist 157 includes a hook 158 ascendable and descendable in the vertical direction. An installation pole 159 is hung down through this hook 158.

The installation pole 159 is a long member having a predetermined length, and the weld portion repairing apparatus 1 can be joined to the lower end portion of the installation pole 159. The installation pole 159 is configured of a plurality of split poles, in which flanges at the upper and lower ends are brought into intimate contact with each other and the split poles can be fastened with a plurality of swing bolts.

As illustrated in FIGS. 4 to 6, the nozzles 101c and 101d include an opening 101f on a wall surface 101e in the inside of the nuclear reactor vessel 101, and are provided as extending in the horizontal direction (or including components in the horizontal direction). The weld portion repairing apparatus 1 is installed as inserted from the opening 101f into the nozzles 101c and 101d. It is noted that in the embodiment, the installation pole 159 is used as an installation jig for use in installation of the weld portion repairing apparatus 1. However, the installation jig is not limited to this configuration. For example, a wire, cable, and rope may be used.

The weld portion repairing apparatus 1 includes an apparatus frame 2 joined to the installation pole 159. The outer shape of the apparatus frame 2 is formed in a shape insertable into the nozzles 101c and 101d, and formed in a tubular shape extending in an insertion direction T. The apparatus frame 2 is mainly provided with an external contact member 3, an internal contact member 4, a sucking unit 5, a contact detecting unit 6, a shooting unit 7, an injection nozzle (a repairing unit) 8, a nozzle push-out moving mechanism 9, a rotational moving mechanism 15, a slide moving mechanism 18, an inspecting unit 20, an inspecting unit push-out moving mechanism 21, a calibration test unit 22, and a calibration test unit advancing and retreating mechanism 23.

As illustrated in FIGS. 4 to 6, the external contact member 3 contacts the wall surface 101e in the case where the apparatus frame 2 is inserted into at a predetermined position in the inside of the nozzles 101c and 101d. As illustrated in FIGS. 4 to 7, the external contact member 3 is mounted so as to protrude as the tip end faces the insertion tip end side (the insertion direction T side) of the apparatus frame 2 with respect to a support member 13 fixed as extending to the outside of the apparatus frame 2. In the embodiment, the external contact member 3 is disposed at six locations in total, two external contact members 3 for one each at a left location and a right location on the upper side of the support member 13 and four external contact members 3 for two each at left locations and right locations on the lower side.

As illustrated in FIGS. 4 and 6, the external contact members 3 at two locations on the upper side and at two locations slightly above on the lower side are configured in such a way that the position of the tip end can be changed to the insertion tip end side of the apparatus frame 2 depending on the presence or absence of a spacer 3a. Moreover, as illustrated in FIGS. 4 to 6, the external contact members 3 at two locations lower on the lower side are movably configured in such a way that the position of the tip end can be changed to the insertion tip end side of the apparatus frame 2 using an actuator (a pneumatic cylinder) 3b. The inlet-side nozzle 101c and the outlet-side nozzle 101d are different in the shape of the opening 101f, and a projection 101g is formed on the outlet-side nozzle 101d. This is because the inlet-side nozzle 101c and the outlet-side nozzle 101d are configured to meet the presence or absence of the projection 101g.

As described above, the external contact members 3 are provided, so that it is made possible to position the state in which the apparatus frame 2 is inserted into at a predetermined position in the inside of the nozzles 101c and 101d.

As illustrated in FIGS. 4 to 6, FIGS. 8, and 9, the internal contact member 4 is provided on a portion on which the apparatus frame 2 is inserted into the nozzles 101c and 101d, and provided at a plurality of locations around the apparatus frame 2 (a center axis S), and the internal contact member 4 protrudes as the tip end faces the outside in the radial direction. In the embodiment, the internal contact member 4 is disposed at seven locations in total, four internal contact members 4 disposed at four locations for two each on the left and the right above the center of the apparatus frame 2 and two each on the front and the back in the insertion direction T of the apparatus frame 2 and two internal contact members 4 disposed at two locations for one each on both sides of the height of the apparatus frame 2 near the center position as illustrated in FIG. 6, and one internal contact member 4 disposed on the lower side of the center position of the apparatus frame 2 as illustrated in FIGS. 5 and 8. The internal contact members 4 are movably configured to advance and retreat in the radial direction about the apparatus frame 2 using an actuator (a pneumatic cylinder) 4a. The internal contact member 4 caused to advance with the actuator 4a contacts the inner surfaces of the nozzles 101c and 101d.

As illustrated in FIGS. 5 and 8, in the case where five internal contact members 4 at five locations are inserted into the inlet-side nozzle 101c, including one internal contact member 4 disposed on the lower side of the center position of the apparatus frame 2, two internal contact members 4 laterally disposed on the upper side of the apparatus frame 2 on the front side of the insertion direction T, and two internal contact members 4 positioned below the two internal contact members 4 on the upper side and disposed on both sides of the height of the apparatus frame 2 near the center position, the one internal contact member 4 on the lower side is used to align the center position of the apparatus frame 2 with the center position of the inlet-side nozzle 101c. On the other hand, as illustrated in FIGS. 4 and 9, on the rear side of one internal contact member 4 on the lower side of the center position of the apparatus frame 2, a tire 4b rolling in the insertion direction T is provided as an internal contact member 4 that does not advance and retreat. In the case where five internal contact members 4 at five locations are inserted into the outlet-side nozzle 101d, including two internal contact members 4 laterally disposed on the upper side of the apparatus frame 2 on the rear side in the insertion direction T and two internal contact members 4 positioned below the two internal contact members 4 on the upper side and disposed on both sides of the height of the apparatus frame 2 near the center position, the tire 4b is used to align the center position of the apparatus frame 2 with the center position of the outlet-side nozzle 101d. The inlet-side nozzle 101c and the outlet-side nozzle 101d are different in the hole shape, and on the inner surface the inlet-side nozzle 101c, a slope tapered toward the inside is formed but the outlet-side nozzle 101d does not have this slope. This is because the center position of the apparatus frame 2 is aligned with the center positions of the nozzles 101c and 101d depending on the presence or absence of this slope.

As described above, the internal contact members 4 are provided, so that it is made possible to align the center position of the apparatus frame 2 with the center positions of the nozzles 101c and 101d.

As illustrated in FIG. 6, the sucking unit 5 is provided to stick to the wall surface 101e in the case where the apparatus frame 2 is inserted into at a predetermined position in the inside of the nozzles 101c and 101d. As illustrated in FIGS. 6 and 7, the sucking unit 5 is mounted in such a way that the sucking surface faces the insertion tip end side (the insertion direction T side) of the apparatus frame 2 with respect to the support member 13. In the embodiment, the sucking unit 5 is disposed at four locations in total, two sucking units 5 for one each at two locations laterally disposed on the upper side of the support member 13 and two sucking units 5 for one each at two locations laterally disposed on the lower side. Moreover, as illustrated in FIG. 6, the sucking unit 5 is movably provided in the insertion direction T using an actuator (a pneumatic cylinder) 5a. Furthermore, as illustrated in FIG. 6, the sucking unit 5 is rockably provided in the lateral direction with respect to a rod 5b of the actuator 5a as matched with the slope of the wall surface 101e.

As described above, the sucking units 5 are provided, so that it is made possible to maintain the state in which the apparatus frame 2 inserted into the nozzles 101c and 101d is positioned with the external contact members 3 and the state in which the center position of the apparatus frame 2 is aligned with the center positions of the nozzles 101c and 101d with the internal contact members 4.

As illustrated in FIG. 6, the contact detecting unit 6 is a unit that detects a contact in the case where the external contact member 3 contacts the wall surface 101e. As illustrated in FIGS. 6 and 7, the contact detecting unit 6 is disposed on the side of the external contact member 3 on the upper side with respect to the support member 13, and is mounted in such a way that the tip end of a contactor 6a faces the insertion tip end side (the insertion direction T side) of the apparatus frame 2. The contactor 6a is movably provided in the insertion direction T with respect to a casing 6b, and is spring-biased with a spring (not illustrated) so as to protrude on the insertion direction T side all the time. The casing 6b is provided with a proximity sensor (not illustrated) in the inside of the casing 6b, which detects a movement in the case where the contactor 6a is moved in the direction opposite to the insertion direction T. In the case where the external contact member 3 contacts the wall surface 101e, the contactor 6a simultaneously contacts the wall surface 101e and is moved in the direction opposite to the insertion direction T, so that the contact detecting unit 6 detects the contact and the movement with the proximity sensor, and detects that the external contact member 3 contacts the wall surface 101e.

As described above, the contact detecting unit 6 is provided, so that it is made possible to recognize the state in which the external contact member 3 contacts the wall surface 101e, that is, to recognize that the apparatus frame 2 inserted into the nozzles 101c and 101d is positioned with the external contact members 3.

As illustrated in FIGS. 4, 5, and 7, the shooting unit 7 is disposed at four locations in total, one each at the both top and bottom and left and right of the apparatus frame 2 with respect to the support member 13. The shooting unit 7 includes a camera 7a and a light 7b, which are provided as facing the insertion tip end side of the apparatus frame 2 (in the insertion direction T). The shooting unit 7 shoots the insertion tip end side of the apparatus frame 2 inserted into the nozzles 101c and 101d from the insertion rear end side.

As described above, the shooting unit 7 is provided, so that it is made possible to monitor the state of the apparatus frame 2 inserted into the nozzles 101c and 101d.

Therefore, in the case where the apparatus frame 2 is inserted into the nozzles 101c and 101d, insertion is performed while minoring images shot by the shooting unit 7 with a monitor (not illustrated) disposed on the work floor 151, and it is recognized that the external contact member 3 contacts the wall surface 101e when the detection signal of the contact detecting unit 6 is inputted. After that, the internal contact member 4 is caused to contact the inner surfaces of the nozzles 101c and 101d, and the sucking unit 5 is stuck to the wall surface 101e of the nozzles 101c and 101d.

The injection nozzle 8 as a repairing unit injects a water jet to the inner surfaces of the nozzles 101c and 101d. As illustrated in FIGS. 4, 5, and 10, the injection nozzle 8 is disposed on a support unit 14 provided on the insertion tip end side of the apparatus frame 2 in such a way that an injection port 8a to inject a water jet faces the inner surfaces of the nozzles 101c and 101d.

As illustrated in FIGS. 4 and 5, the support unit 14 is rotatably supported about the center axis S of the apparatus frame 2 (the center axes of the nozzles 101c and 101d) with respect to the apparatus frame 2. More specifically, the support unit 14 is supported on the rotational moving mechanism 15. The rotational moving mechanism 15 includes a rotating shaft 15a. This rotating shaft 15a is mounted with the support unit 14, and is rotatably supported about the center axis S with respect to the apparatus frame 2. The rotating shaft 15a is formed in a cylindrical shape extending along the center axis S, and a driven gear 15b is mounted on the outer surface. The driven gear 15b is engaged with a drive gear 15d provided on the output shaft of a rotating motor 15c fixed to the apparatus frame 2. The rotational moving mechanism 15 rotates the rotating shaft 15a by transmitting the rotation of the drive gear 15d to the driven gear 15b with the drive of the rotating motor 15c. Thus, the support unit 14 supported on the rotating shaft 15a is rotated together with the injection nozzle 8. As a result, the injection nozzle 8 is rotated and moved along a predetermined moving trace about the center axis S.

As described above, the injection nozzle 8 is disposed on the support unit 14 in such a way that the injection port 8a injecting a water jet faces the inner surfaces of the nozzles 101c and 101d. Therefore, the injection nozzle 8 that is rotated and moved with the rotational moving mechanism 15 is rotated and moved along a predetermined moving trace in the circumferential direction of the nozzles 101c and 101d while the injection port 8a faces the inner surfaces of the nozzles 101c and 101d. Namely, in the case where a vertically downward rotation angle is an angle of 0°, the orientation of the injection port 8a of the injection nozzle 8 is rotated at an angle of 360° in the circumferential direction of the nozzles 101c and 101d beyond a vertically upward rotation angle of 180°. The moved positions of the injection port 8a and the inspecting unit 20 (a flaw detection sensor 20A and an imaging sensor 20B), described later, on the moving trace are detected at a nozzle position detecting unit (not illustrated) provided on the rotational moving mechanism 15. In the embodiment, the nozzle position detecting unit includes the rotating motor 15c as a servo motor, and thus the moved positions of the injection port 8a and the inspecting unit 20 (the flaw detection sensors 20A and the imaging sensor 20B) are detected on the moving trace.

As illustrated in FIGS. 4 and 5, in the foregoing rotational moving mechanism 15, a high-pressure water supply pipe 16 that supplies high-pressure water to the injection nozzle 8 is disposed in the rotating shaft 15a. The high-pressure water supply pipe 16 is provided as extending from the insertion rear end side of the apparatus frame 2 along the center axis S in the rotating shaft 15a, and a swivel bearing 17 is provided at the extending end portion in the midway of the high-pressure water supply pipe 16. The high-pressure water supply pipe 16 extends upward from the swivel bearing 17, and is connected to a high-pressure water pump 160 provided on the work floor 151 for delivering high-pressure water as illustrated in FIG. 3. Namely, high-pressure water delivered from the high-pressure water pump 160 is passed through the high-pressure water supply pipe 16, supplied to the injection nozzle 8, and injected as a water jet from the injection port 8a to the inner surfaces of the nozzles 101c and 101d. The injection nozzle 8 is then rotated about the center axis S by the rotational moving mechanism 15, and the water jet is injected to the inner surface along the circumferential direction of the nozzles 101c and 101d. Moreover, when the rotating shaft 15a is rotated by the rotational moving mechanism 15, the high-pressure water supply pipe 16 in the inside of the rotational moving mechanism 15 is rotated together. However, the swivel bearing 17 is provided in the midway point of the high-pressure water supply pipe 16, so that the high-pressure water supply pipe 16 can be prevented from being twisted.

Furthermore, as illustrated in FIGS. 4 and 5, the support unit 14 is slidably supported along the center axis S of the apparatus frame 2 (the center axes of the nozzles 101c and 101d) with respect to the apparatus frame 2. More specifically, the support unit 14 is supported on the slide moving mechanism 18 provided in the inside of the apparatus frame 2. As illustrated in FIGS. 4 to 6, FIGS. 8 and 9, the slide moving mechanism 18 includes a slide rail 18a, a slide base 18b, a slider 18c, a ball screw 18d, a nut 18e, and a slide motor 18f. The slide rail 18a extends in parallel with the center axis S of the apparatus frame 2, and is laterally provided in a pair. The slide base 18b is movably supported in the extending direction of the slide rail 18a with respect to the slide rail 18a. The slider 18c is mounted through the slide rail 18a, and fixed to the slide base 18b. The ball screw 18d is provided as extending along the center axis S of the apparatus frame 2 in parallel with the slide rail 18a, and is rotatably supported about the axis in parallel with the center axis S with respect to the apparatus frame 2. This ball screw 18d is screwed with the nut 18e. The slide motor 18f is joined to the ball screw 18d, and rotates the ball screw 18d. In the slide moving mechanism 18, the ball screw 18d is rotated by the drive of the slide motor 18f, and then the slider 18c is moved in the extending direction of the ball screw 18d (in the direction in parallel with the center axis S) in association with the slide base 18b together with the nut 18e. The slide base 18b is mounted with the rotating shaft 15a of the foregoing rotational moving mechanism 15 for supporting the support unit 14. Namely, the rotating shaft 15a is moved in the direction in parallel with the center axis S together with the slide base 18b in association with the support unit 14 on which the injection nozzle 8 is supported. As a result, the injection nozzle 8 is slid and moved along the center axis S.

Now, as described above, the rotating shaft 15a is rotated about the center axis S, and mounted in a form in which the rotating shaft 15a is allowed to rotate with respect to the slide base 18b. Moreover, on the rotating shaft 15a, the driven gear 15b is movably provided along the center axis S. Furthermore, the movement of the driven gear 15b is restricted along the center axis S in the state in which the engagement of the drive gear 15d is maintained. Thus, the transmission of drive to rotate the rotating shaft 15a is always maintained in sliding and moving the rotating shaft 15a by the slide moving mechanism 18. Namely, the rotating shaft 15a is provided in such a way that the rotating shaft 15a itself can rotate, and can slide and move along the center axis S.

The nozzle push-out moving mechanism 9 pushes out and moves the injection nozzle 8 from the injection port 8a along the direction in which a water jet is injected. As illustrated in FIG. 10, the nozzle push-out moving mechanism 9 is provided on the support unit 14, and includes a slide rail 9a, a slider 9b, a slide base 9c, and an actuator 9d. The slide rail 9a extends in the direction orthogonal to the center axis S, and is provided in a pair. The slider 9b is movably supported in the extending direction of the slide rail 9a. The slide base 9c is supported on the slider 9b, and movably provided in the extending direction of the slide rail 9a. The injection nozzle 8 is fixed to the slide base 9c in such a way that the injection port 8a is directed in the extending direction of the slide rail 9a. The actuator 9d is provided on the support unit 14 as individually disposed on the slide rails 9a, and joined to the slide base 9c. The actuator 9d moves the slide base 9c in the extending direction of the slide rail 9a, which is configured as a pneumatic cylinder in the embodiment. The actuator 9d is not limited to a pneumatic cylinder, which may be one that moves the slide base 9c in the extending direction of the slide rail 9a. In the nozzle push-out moving mechanism 9, the slide base 9c is then moved in the direction orthogonal to the center axis S together with the injection nozzle 8 by the drive of the actuator 9d. Namely, the injection nozzle 8 is pushed out and moved as coming close to or separating from the inner surfaces of the nozzles 101c and 101d in a form in which the injection port 8a of the injection nozzle 8 is opposite to the inner surfaces of the nozzles 101c and 101d. As a result, the injection distance of a water jet is set, which is a distance from the injection port 8a to the inner surfaces of the nozzles 101c and 101d. A predetermined distance of the injection distance of a water jet is 130 mm ± 10 mm.

Therefore, the slide moving mechanism 18 causes the injection nozzle 8 to advance and retreat at a position at which the injection nozzle 8 faces a predetermined inner surface of the nozzles 101c and 101d to which the injection port 8a applies water jet peening in the state in which the apparatus frame 2 is inserted into the nozzles 101c and 101d using the external contact members 3, the internal contact members 4, and the sucking units 5. After that, the nozzle push-out moving mechanism 9 pushes out and moves the injection nozzle 8 to provide an injection distance. After that, the rotational moving mechanism 15 rotates and moves the injection nozzle 8 while injecting a water jet from the injection port 8a of the injection nozzle 8. Thus, water jet peening is applied to a predetermined inner surface of the nozzles 101c and 101d.

The inspecting unit 20 inspects a predetermined inner surface (the weld portion 122) of the nozzles 101c and 101d to which water jet peening is applied in the embodiment. As illustrated in FIGS. 4 to 6, the inspecting unit 20 is provided on the support unit 14. Therefore, the inspecting unit 20 is rotated and moved about the center axis S with the foregoing rotational moving mechanism 15, and slid and moved along the center axis S with the slide moving mechanism 18. The inspecting unit 20 includes the flaw detection sensors 20A and the imaging sensor 20B. The flaw detection sensor 20A contacts the inner surfaces of the nozzles 101c and 101d for flaw detection inspection. In the embodiment, the flaw detection sensor 20A is an eddy current flaw detection sensor, which is rotated and moved about the center axis S with the rotational moving mechanism 15, and moved along the circumferential direction with respect to the inner surfaces of the nozzles 101c and 101d for flaw detection. Moreover, two flaw detection sensors 20A are provided as arranged side by side along the inner surfaces of the nozzles 101c and 101d in the circumferential direction, which are inspection targets in the embodiment. The imaging sensor 20B shoots the inner surfaces of the nozzles 101c and 101d for visual inspection, which is rotated and moved about the center axis S with the rotational moving mechanism 15, and moved along the circumferential direction with respect to the inner surfaces of the nozzles 101c and 101d for shooting. It is noted that the inspecting unit 20 includes a light to illuminate a portion to be shot by the imaging sensor 20B, although not clearly illustrated in the drawings.

The inspecting unit push-out moving mechanism 21 pushes out and moves the inspecting unit 20 toward the inner surfaces of the nozzles 101c and 101d. As illustrated in FIG. 10, the inspecting unit push-out moving mechanism 21 is provided on the support unit 14, and includes a slide rail 21a, a slider 21b, a slide base 21c, and an actuator 21d. The slide rail 21a extends in the direction orthogonal to the center axis S, and is provided in a pair, and formed as the slide rail 9a of the foregoing nozzle push-out moving mechanism 9 is extended. The slider 21b is movably supported in the extending direction of the slide rail 21a. The slide base 21c is supported on the slider 21b, and movably provided in the extending direction of the slide rail 21a. The flaw detection sensors 20A (see FIG. 11) and the imaging sensor 20B, which are the inspecting unit 20, are mounted on the slide base 21c. The actuator 21d is provided on the support unit 14 as disposed on the side of one of the slide rails 21a, and is joined to the slide base 21c. The actuator 21d moves the slide base 21c in the extending direction of the slide rail 21a, which is configured as a pneumatic cylinder in the embodiment. The actuator 21d is not limited to a pneumatic cylinder, which may be one that moves the slide base 21c in the extending direction of the slide rail 21a. In the inspecting unit push-out moving mechanism 21, the slide base 21c is moved in the direction orthogonal to the center axis S together with the inspecting unit 20 (the flaw detection sensors 20A and the imaging sensor 20B) by the drive of the actuator 21d. The pushing-out and moving direction is the direction in which the inspecting unit 20 performs inspection, which is a direction in which a face contacting the inner surfaces of the nozzles 101c and 101d is directed in the case of the flaw detection sensor 20A, whereas which is a direction in which the imaging sensor 20B shoots the inner surfaces of the nozzles 101c and 101d in the case of the imaging sensor 20B. Namely, the inspecting unit push-out moving mechanism 21 pushes out and moves the inspecting unit 20 in such a way that the inspecting unit 20 comes close to or separates from the inner surfaces of the nozzles 101c and 101d.

Moreover, as illustrated in FIGS. 10 and 11, the inspecting unit push-out moving mechanism 21 includes a flaw detection sensor push-out moving mechanism 21A that pushes out and moves the flaw detection sensor 20A alone and an imaging sensor push-out moving mechanism 21B that pushes out and moves the imaging sensor 20B alone.

As illustrated in FIG. 11, the flaw detection sensor push-out moving mechanism 21A is provided on the slide base 21c, and includes a fixed base 21Aa, a slide rail 21Ab, a slider 21Ac, an actuator 21Ad, and a slide base 21Ae. The fixed base 21Aa is fixed to the slide base 21c. The slide rail 21Ab is provided in a pair in parallel with the slide rail 9a, and extends in the direction orthogonal to the center axis S (see FIGS. 4 to 6). The slider 21Ac is movably supported in the extending direction of the slide rail 21Ab. The actuator 21Ad is fixed to the fixed base 21Aa, and joined to the slide base 21Ae. The actuator 21Ad moves the slide base 21Ae in the extending direction of the slide rail 21Ab, which is configured as a pneumatic cylinder in the embodiment. The actuator 21Ad is not limited to a pneumatic cylinder, which may be one that moves the slide base 21Ae in the extending direction of the slide rail 21Ab. The slide base 21Ae supports the flaw detection sensor 20A. Two flaw detection sensors 20A are provided as arranged side by side along the inner surfaces of the nozzles 101c and 101d in the circumferential direction, which are targets for inspection, as described above, and the flaw detection sensors 20A are supported on first sensor support units 20Aa so as to individually tilt in the circumferential direction. The first sensor support units 20Aa are integrally mounted on a sensor base 20Ab. Both ends of the sensor base 20Ab are supported on a second sensor support unit 20Ac in such a way that the sensor base 20Ab tilts about an axis orthogonal to the slide rail 21Ab in the extending direction of the center axis S. This second sensor support unit 20Ac is mounted on the slide base 21Ae. Moreover, the second sensor support unit 20Ac is movably provided on the slide base 21Ae in the extending direction of the slide rail 21Ab, and is elastically supported with a spring (not illustrated). Namely, the flaw detection sensor 20A is supported in such a way that the flaw detection sensor 20A freely tilts in the circumferential direction and in the extending direction of the center axis S with the first sensor support unit 20Aa and the second sensor support unit 20Ac and is spring-biased with the spring to follow the shape of the inner surfaces of the nozzles 101c and 101d and contact the inner surfaces of the nozzles 101c and 101d. In the flaw detection sensor push-out moving mechanism 21A, the slide base 21Ae is pushed out and moved in the direction orthogonal to the center axis S together with the flaw detection sensor 20A by the drive of the actuator 21Ad.

As illustrated in FIG. 10, the imaging sensor push-out moving mechanism 21B is provided on the slide base 21c, and includes an actuator 21Ba and a slide base 21Bb. The actuator 21Ba is fixed to the slide base 21c, and joined to the slide base 21Bb. The actuator 21Ba moves the slide base 21Bb in the extending direction of the slide rail 21a, which is configured as a pneumatic cylinder in the embodiment. The actuator 21Ba is not limited to a pneumatic cylinder, which may be one that moves the slide base 21Bb in the extending direction of the slide rail 21a. The slide base 21Bb supports the imaging sensor 20B. In the imaging sensor push-out moving mechanism 21B, the slide base 21Bb is pushed out and moved in the direction orthogonal to the center axis S together with the imaging sensor 20B by the drive of the actuator 21Ba.

The calibration test unit 22 calibrates and tests the inspecting unit 20 (the flaw detection sensors 20A and the imaging sensor 20B). As illustrated in FIGS. 4 to 6, the calibration test unit 22 is provided on the calibration test unit advancing and retreating mechanism 23. The calibration test unit 22 includes flaw detection sensor calibration test specimens 22A that calibrate the flaw detection sensors 20A and an imaging sensor calibration test specimen 22B that calibrates the imaging sensor 20B.

The calibration test unit advancing and retreating mechanism 23 advances and retreats the calibration test unit 22 in the direction along the center axis S. As illustrated in FIGS. 4 to 6, the calibration test unit advancing and retreating mechanism 23 is provided on the apparatus frame 2. Therefore, the calibration test unit advancing and retreating mechanism 23 and the calibration test unit 22 are not involved in rotation and movement of the foregoing rotational moving mechanism 15 and sliding and movement of the slide moving mechanism 18. The calibration test unit advancing and retreating mechanism 23 includes a fixed base 23a, a slide rail 23b, a slide base 23c, and an actuator 23d. The fixed base 23a is fixed to the apparatus frame 2. The slide rail 23b extends in parallel with the center axis S, and is provided in a pair. The slide base 23c supports the calibration test unit 22, and is movably provided in the extending direction of the slide rail 23b. The actuator 23d is fixed to the fixed base 23a, and joined to the slide base 23c. The actuator 23d moves the slide base 23c in the extending direction of the slide rail 23b, which is configured as a pneumatic cylinder in the embodiment. The actuator 23d is not limited to a pneumatic cylinder, which may be one that moves the slide base 23c in the extending direction of the slide rail 23b. In the calibration test unit advancing and retreating mechanism 23, the slide base 23c is advanced and retreated on a linear trace in parallel with the center axis S together with the calibration test unit 22 (the flaw detection sensor calibration test specimens 22A and the imaging sensor calibration test specimen 22B) by the drive of the actuator 23d (see FIGS. 13 to 17).

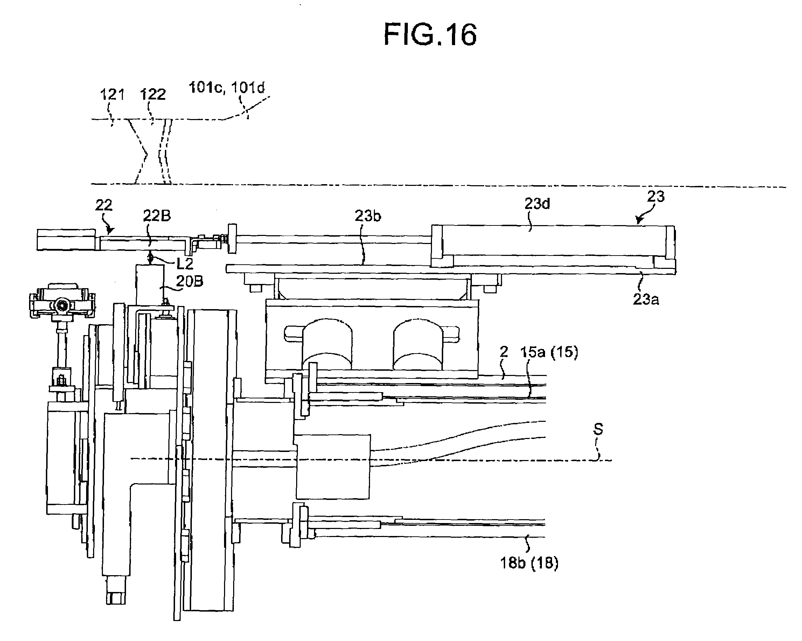

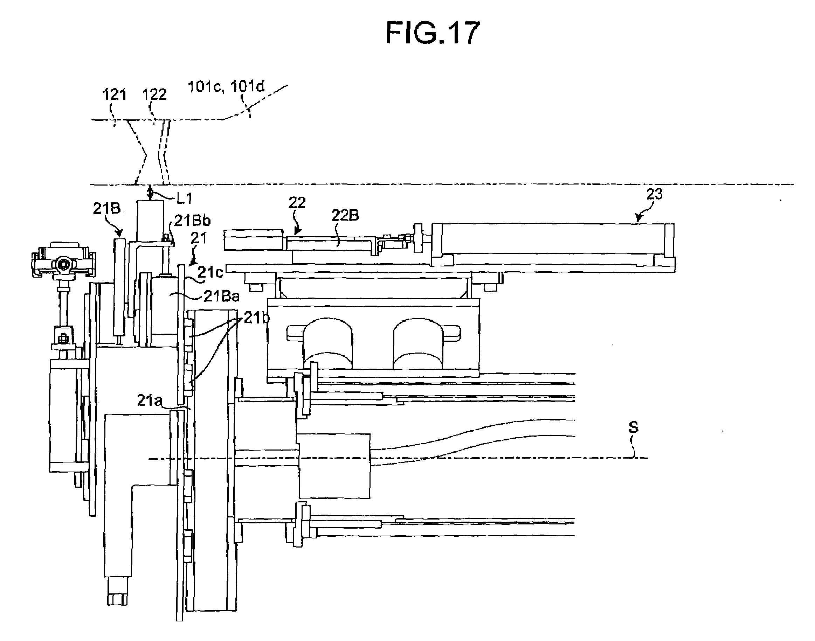

Here, the calibration test unit 22 supported on the slide base 23c is disposed in such a way that the positions of the flaw detection sensor calibration test specimens 22A and the imaging sensor calibration test specimen 22B are matched with the positions at which the flaw detection sensors 20A and the imaging sensor 20B of the foregoing inspecting unit 20 face the inner surfaces of the nozzles 101c and 101d, which are targets for inspection, in the vertical upward direction of the apparatus frame 2. Thus, as illustrated in FIGS. 13 and 16, the flaw detection sensor calibration test specimens 22A and the imaging sensor calibration test specimen 22B are matched with the positions at which the flaw detection sensors 20A and the imaging sensor 20B face the inner surfaces of the nozzles 101c and 101d, which are targets for inspection, on the trace of pushing out and moving the inspecting unit 20 (the flaw detection sensors 20A and the imaging sensor 20B) in the state in which the flaw detection sensor calibration test specimens 22A and the imaging sensor calibration test specimen 22B are advanced by the calibration test unit advancing and retreating mechanism 23. Moreover, as illustrated in FIGS. 16 and 17, the calibration test unit 22 is disposed in such a way that the imaging sensor 20B is located as matched with the position of a distance L2, which is the same as a distance L1 in shooting the inner surfaces of the nozzles 101c and 101d, in the state in which the calibration test unit 22 is advanced by the calibration test unit advancing and retreating mechanism 23.

As illustrated in FIG. 12, the weld portion repairing apparatus 1 according to the embodiment includes a control unit 25. The control unit 25 controls the operation of the weld portion repairing apparatus 1. FIG. 12 is a control system for inspection and repairing.

As illustrated in FIG. 12, the control unit 25 controls the rotating motor 15c of the rotational moving mechanism 15, the slide motor 18f of the slide moving mechanism 18, the actuator 23d of the calibration test unit advancing and retreating mechanism 23, the actuator 21d of the inspecting unit push-out moving mechanism 21, the actuator 21Ad of the flaw detection sensor push-out moving mechanism 21A, the actuator 21Ba of the imaging sensor push-out moving mechanism 21B, the actuator 9d of the nozzle push-out moving mechanism 9, and the high-pressure water pump 160. Moreover, the control unit 25 is connected to the flaw detection sensors 20A and the imaging sensor 20B, outputs drive signals to the sensors 20A and 20B, and receives detection signals from the sensors 20A and 20B.

Furthermore, the control unit 25 determines a weld boundary position (a different material weld boundary position) α on the weld portion 122 using the detection signal received from the flaw detection sensor 20A. As illustrated in FIG. 2, the weld boundary position α is a boundary position between the buttering weld portion 122a and the overlay weld portion 122b on the inner surfaces of the nozzles 101c and 101d. For the determination of the weld boundary position α, a determination is made based on the description in Japanese Patent No. 4885068.

In the embodiment, the control unit 25 sets a flaw detection inspection range WA by the flaw detection sensor 20A of the inspecting unit 20 with reference to the determined weld boundary position α. As illustrated in FIG. 2, the flaw detection inspection range WA is set in such a way that reference is made to the weld boundary position α, a predetermined reference inspection range WAa is determined, which is an inspection reference, on the nozzle 101c side and the nozzle 101d side from the weld boundary position α based on the design drawings in applying the weld portion 122, and a requested inspection range WAb is determined, which includes the reference inspection range WAa and is requested for inspection, on the safe-end pipe 121 side. Moreover, in order to provide a margin for flaw detection inspection, the flaw detection inspection range WA is set in such a way that a margin WAc is provided on both sides of the requested inspection range WAb.

Furthermore, the control unit 25 sets a visual inspection range WB by the imaging sensor 20B of the inspecting unit 20 with reference to the weld boundary position α. As illustrated in FIG. 2, the visual inspection range WB is set in such a way that the requested inspection range WAb in the flaw detection inspection range WA is set as the visual inspection range WB because the weld boundary position α can be identified.

In addition, the control unit 25 sets a repair range (a water jet application range) WC by the injection nozzle 8, which is a repairing unit, with reference to the weld boundary position α. In the embodiment, since the repair range WC is the application range of a water jet, ranges WCa and WCb are set at which the outer edge of a circular application range of a water jet is positioned from the weld boundary position α to the nozzle 101c side and the nozzle 101d side in such a way that a circular application range of a water jet is an effective range for application and the center of the circular application range of a water jet is matched with a center C of a range including the buttering weld portion 122a and the final weld portion 122c based on the design drawings in applying the weld portion 122.

It is noted that for another scheme for prevention and maintenance of the stress corrosion cracks of the weld portion 122, there is inlay work in which the weld portion 122 is cut using a disc-like grindstone. In the case of performing inlay work, preferably, the weld portion repairing apparatus uses a manipulator that supports a grindstone, although not clearly illustrated in the drawings. In the inlay work, a depth D is requested to cut the weld portion 122 from the weld boundary position α so as to leave the overlay weld portion 122b. Thus, the control unit sets a cutting range indicated by an alternate long and short dash line in FIG. 2 in such a way that the depth D is provided with reference to the weld boundary position α.

In the following, repair procedures (a repairing method) performed by the weld portion repairing apparatus 1 controlled by the control unit 25 will be described. FIGS. 13 to 17 illustrate the state in which the apparatus frame 2 is inserted into and positioned at a predetermined position in the inside of the nozzles 101c and 101d with the external contact members 3, the center position (the center axis S) of the apparatus frame 2 is matched with the center positions of the nozzles 101c and 101d with the internal contact members 4, and this state is maintained by the sucking units 5. Moreover, the rotational moving mechanism 15 is set in such a way that the flaw detection sensors 20A and the imaging sensor 20B of the inspecting unit 20 are at positions (reference positions) facing the vertical upward direction of the apparatus frame 2.

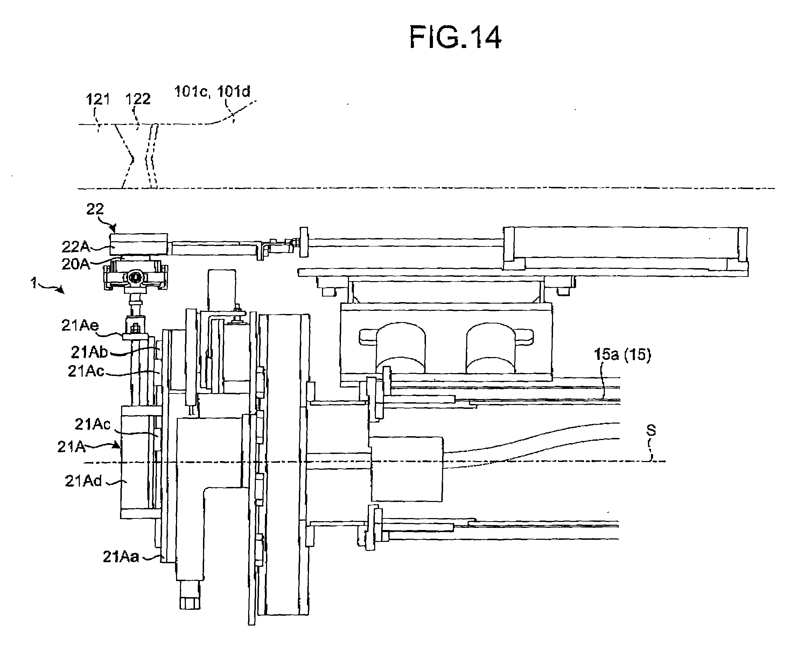

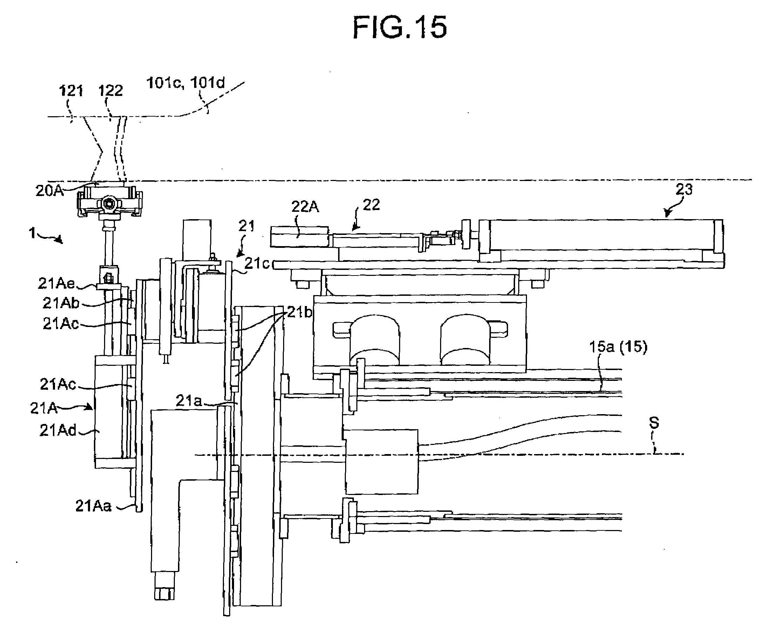

For the repair procedures, first, the flaw detection sensor 20A performs flaw detection inspection. As illustrated in FIG. 13, the slide moving mechanism 18 slides and moves the flaw detection sensors 20A of the inspecting unit 20 in parallel with the center axis S in such a way that the flaw detection sensors 20A are located at the vertical downward position of the weld portion 122. In this state, the calibration test unit advancing and retreating mechanism 23 advances the calibration test unit 22. Thus, the flaw detection sensor calibration test specimens 22A are disposed on the trace on which the flaw detection sensors 20A are pushed out and moved to the inner surfaces of the nozzles 101c and 101d at the reference position at which the weld portion repairing apparatus 1 is inserted into the nozzles 101c and 101d. Subsequently, as illustrated in FIG. 14, the flaw detection sensor push-out moving mechanism 21A pushes out and moves the flaw detection sensors 20A in the direction orthogonal to the center axis S to contact the flaw detection sensor calibration test specimens 22A. Subsequently, the rotational moving mechanism 15 rotates and moves the flaw detection sensors 20A about the center axis S to subject the flaw detection sensor calibration test specimens 22A to flaw detection. Thus, the flaw detection sensors 20A are calibrated and tested based on the flaw detection sensor calibration test specimens 22A. Subsequently, as illustrated in FIG. 15, the calibration test unit advancing and retreating mechanism 23 causes the calibration test unit 22 to retreat. Subsequently, the inspecting unit push-out moving mechanism 21 and the flaw detection sensor push-out moving mechanism 21A push out and move the flaw detection sensors 20A in the direction orthogonal to the center axis S, and cause the flaw detection sensors 20A to contact the inner surfaces of the nozzles 101c and 101d (the weld portion 122). Subsequently, the slide moving mechanism 18 slides and moves the flaw detection sensors 20A in parallel with the center axis S. The weld boundary position α on the weld portion 122 is determined using the detection signals of the flaw detection sensors 20A. Moreover, the flaw detection inspection range WA is set with reference to the weld boundary position α. Subsequently, the rotational moving mechanism 15 rotates and moves the flaw detection sensors 20A about the center axis S, and the inner surfaces of the nozzles 101c and 101d including the weld portion 122 are subjected to flaw detection. Thus, the flaw detection sensors 20A perform flaw detection inspection. Subsequently, as illustrated in FIGS. 13 and 14, calibrations and tests are performed after inspection of the flaw detection sensors 20A based on the flaw detection sensor calibration test specimens 22A. Subsequently, the detected data of flaw detection inspection is analyzed, and the weld boundary position α is confirmed.

Subsequently, the imaging sensor 20B performs visual inspection. First, the visual inspection range WB is set with reference to the weld boundary position α determined and confirmed in flaw detection inspection. Subsequently, as illustrated in FIG. 16, the slide moving mechanism 18 slides and moves the imaging sensor 20B of the inspecting unit 20 in parallel with the center axis S in such a way that the imaging sensor 20B is located at the vertical downward position of the weld portion 122. In this state, the calibration test unit advancing and retreating mechanism 23 advances the calibration test unit 22. Thus, the imaging sensor calibration test specimen 22B is disposed on the trace on which the imaging sensor 20B is pushed out and moved to the inner surfaces of the nozzles 101c and 101d at the reference position at which the weld portion repairing apparatus 1 is inserted into the nozzles 101c and 101d. Therefore, the imaging sensor 20B is calibrated and tested based on the imaging sensor calibration test specimen 22B. Subsequently, as illustrated in FIG. 17, the calibration test unit advancing and retreating mechanism 23 causes the calibration test unit 22 to retreat. Subsequently, the inspecting unit push-out moving mechanism 21 and the imaging sensor push-out moving mechanism 21B push out and move the imaging sensor 20B in the direction orthogonal to the center axis S. Subsequently, the rotational moving mechanism 15 rotates and moves the imaging sensor 20B about the center axis S to shoot the inner surfaces of the nozzles 101c and 101d including the weld portion 122. Thus, visual inspection is performed with images shot by the imaging sensor 20B. Subsequently, as illustrated in FIG. 16, calibrations and tests are performed after inspection of the imaging sensor 20B based on the imaging sensor calibration test specimen 22B.

Next, the injection nozzle 8, which is a repairing unit, is used for repairing. First, the repair range WC is set with reference to the weld boundary position α determined and confirmed in flaw detection inspection. Subsequently, the slide moving mechanism 18 slides and moves the injection port 8a of the injection nozzle 8 in parallel with the center axis S in such a way that the injection port 8a is directed to the weld portion 122. Subsequently, the nozzle push-out moving mechanism 9 pushes out and moves the injection nozzle 8 in the direction orthogonal to the center axis S. Thus, the injection distance of a water jet is set, which is a distance from the injection port 8a to the inner surfaces of the nozzles 101c and 101d including the weld portion 122. Subsequently, the high-pressure water pump 160 is driven to inject high-pressure water from the injection port 8a of the injection nozzle 8, and the rotational moving mechanism 15 rotates the injection nozzle 8 about the center axis S. Thus, a water jet is injected along the circumferential direction of the inner surfaces of the nozzles 101c and 101d including the weld portion 122, and the water jet improves tensile residual stress on the inner surfaces of the nozzles 101c and 101d including the weld portion 122 to compressive residual stress. Lastly, the imaging sensor 20B subjects the location repaired with the water jet to visual inspection for confirmation.

As described above, the weld portion repairing method according to the embodiment is the weld portion repairing method for repairing the weld portion 122 provided on the nuclear power plant, including: determining the weld boundary position α on the weld portion 122 using the detection signals of the flaw detection sensors 20A; setting the repair range WC with reference to the weld boundary position α; and repairing the repair range WC.

According to the weld portion repairing method, the repair range WC is set with reference to the weld boundary position α determined using the flaw detection sensors 20A, so that it is possible to perform accurate repairing.

Moreover, the weld portion repairing method according to the embodiment is the weld portion repairing method for repairing the weld portion 122 provided on the nuclear power plant, including: determining the weld boundary position α on the weld portion 122 using the detection signals of the flaw detection sensors 20A; setting the flaw detection inspection range WA with reference to the weld boundary position α using the flaw detection sensors 20A; inspecting the flaw detection inspection range WA using the flaw detection sensors 20A; setting the repair range WC on the repair location subjected to inspection with reference to the weld boundary position α; and repairing the repair range WC.

According to the weld portion repairing method, the flaw detection inspection range WA and the repair range WC are set with reference to the weld boundary position α determined by flaw detection inspection, so that it is possible to perform accurate flaw detection inspection and repairing with no displacement between both of the ranges. As described above, in accordance with the weld portion repairing method according to the embodiment, it is possible to set both of the ranges according to the criteria involved in both of inspection and repairing and to inspect and repair the weld portion 122.

Moreover, the weld portion repairing method according to the embodiment further includes: setting the visual inspection range WB using the imaging sensor 20B with reference to the weld boundary position α; and inspecting the visual inspection range WB using the imaging sensor 20B.

According to the weld portion repairing method, the visual inspection range WB is set with reference to the weld boundary position α determined by flaw detection inspection, so that it is possible to perform accurate visual inspection also in visual inspection with no displacement in the flaw detection inspection range or in the repair range.

Furthermore, in the weld portion repairing method according to the embodiment, the weld portion 122 is a different material weld portion in which different weld materials (the buttering weld portion 122a, the overlay weld portion 122b, and the final weld portion 122c) are joined together so as to weld different materials (the nozzles 101c and 101d, and the primary cooling water pipe 105) together.

Since the surface of the different material weld portion is machined, it is difficult to determine the different material weld boundary position α by visual confirmation. Therefore, the flaw detection sensors 20A are used to detect the different material weld boundary position α, so that it is possible to accurately detect the different material weld boundary position α.

In addition, the weld portion repairing apparatus 1 according to the embodiment is the weld portion repairing apparatus 1 that repairs the weld portion 122 provided on the nuclear power plant, including the apparatus frame 2 disposed at the position of the weld portion 122, the flaw detection sensor 20A provided on the apparatus frame 2, the injection nozzle (the repairing unit) 8 that is provided on the apparatus frame 2 and repairs the weld portion 122, and the control unit 25 that controls determining the weld boundary position α on the weld portion 122 using the detection signals of the flaw detection sensors 20A, setting the repair range WC with reference to the weld boundary position α, and repairing the repair range WC using the injection nozzle 8.

According to the weld portion repairing apparatus, the repair range WC is set with reference to the weld boundary position α determined using the flaw detection sensors 20A, so that it is possible to perform accurate repairing.

Moreover, the weld portion repairing apparatus 1 according to the embodiment is the weld portion repairing apparatus 1 that repairs the weld portion 122 provided on the nuclear power plant, including the apparatus frame 2 disposed at the position of the weld portion 122, the inspecting unit 20 that performs flaw detection inspection on the weld portion 122 using the flaw detection sensors 20A provided on the apparatus frame 2, the injection nozzle (the repairing unit) 8 that is provided on the apparatus frame 2 and repairs the repair location subjected to flaw detection inspection by the inspecting unit 20, and the control unit 25 that controls determining the weld boundary position α on the weld portion 122 using the detection signals of the flaw detection sensors 20A of the inspecting unit 20, setting the flaw detection inspection range WA using the flaw detection sensors 20A with reference to the weld boundary position α, subjecting the flaw detection inspection range WA to flaw detection inspection using the flaw detection sensors 20A, setting the repair range WC on the repair location subjected to flaw detection inspection with reference to the weld boundary position α, and repairing the repair range WC with a water jet injected from the injection nozzle 8.

According to the weld portion repairing apparatus 1, the flaw detection inspection range WA and the repair range WC are set with reference to the weld boundary position α determined by flaw detection inspection, so that it is possible to perform accurate flaw detection inspection and repairing with no displacement between both of the ranges. As described above, in accordance with the weld portion repairing apparatus according to the embodiment, it is possible to set both of the ranges according to the criteria involved in both of inspection and repairing and to inspect and repair the weld portion 122.

Furthermore, in the weld portion repairing apparatus 1 according to the embodiment, the inspecting unit 20 includes the imaging sensor 20B that performs visual inspection on the weld portion 122. The control unit 25 controls setting the visual inspection range WB using the imaging sensor 20B with reference to the weld boundary position α and subjecting the visual inspection range WB to visual inspection using the imaging sensor 20B.

According to the weld portion repairing apparatus 1, the visual inspection range WB is set with reference to the weld boundary position α determined by flaw detection inspection, so that it is possible to perform accurate visual inspection also in visual inspection with no displacement in the flaw detection inspection range or in the repair range.

It is noted that in the foregoing embodiment, inspection and repairing of the weld portion 122 on the inlet-side nozzle 101c and the outlet-side nozzle 101d of the nuclear reactor vessel 101 are described. However, the embodiment is not limited thereto. For example, it is possible to obtain the similar effect on inspection and repairing of the weld portion of the inlet-side nozzle of the inlet-side channel head 103a or the outlet-side nozzle of the outlet-side channel head 103b of the steam generator 103 by similarly setting the inspection range and the repair range with reference to the weld boundary position. It is noted that in the case of the inlet-side nozzle and the outlet-side nozzle of the steam generator 103, the apparatus frame is configured as a manipulator, and the manipulator is mounted with the inspecting unit and the repairing unit, although not clearly illustrated in the drawings. The repairing unit may perform shot peening or inlay work, not limited to water jet peening.

It is noted that the weld portion 122 is not limited to the foregoing different material weld portion. For example, although not clearly illustrated in the drawings, in the safety injection nozzle of the nuclear reactor vessel 101, the welded joint between the safety injection nozzle and the safe-end is a different material weld portion. However, there is a welded joint between the safe-end and the stainless steel pipe on the back side (on the side apart from the nuclear reactor vessel 101), and the joint is a stainless steel weld portion made of the same material, not made of different materials. The same material weld portion generally includes weld penetration beads on the inner surface to easily tell the weld boundary position. However, it is not enabled to apply flaw detection inspection because of the penetration beads. Therefore, the weld boundary position is measured by visual inspection, and repaired by water jet peening. However, some nuclear power plants have penetration beads smoothly machined. In this case, the weld boundary position can be confirmed by flaw detection inspection before repaired, and the weld portion repairing method and the weld portion repairing apparatus according to the embodiment can be applied.

### Reference Signs List

- 1: Weld portion repairing apparatus
- 2: Apparatus frame
- 8: Injection nozzle (the repairing unit)
- 8a: Injection port
- 9: Nozzle push-out moving mechanism
- 15: Rotational moving mechanism
- 18: Slide moving mechanism
- 20: Inspecting unit
- 20A: Flaw detection sensor
- 20B: Imaging sensor
- 21: Inspecting unit push-out moving mechanism
- 21A: Flaw detection sensor push-out moving mechanism
- 21B: Imaging sensor push-out moving mechanism
- 25: Control unit
- 101: Nuclear Reactor vessel
- 101c: Inlet-side nozzle
- 101d: Outlet-side nozzle
- 122: Weld portion
- 122a: Buttering weld portion
- 122b: Overlay weld portion
- 122c: Final weld portion
- α: Weld boundary position
- WA: Flaw detection inspection range
- WB: Visual inspection range
- WC: Repair range

## Claims

1. A weld portion repairing method for repairing a weld portion (122) provided on a nuclear power plant, the method being **characterized in that** it comprises:
determining a weld boundary position (α) on the weld portion (122) using a detection signal of a flaw detection sensor (20A);
setting a repair range (WC) with reference to the weld boundary position (α); and
repairing the repair range (WC).

2. A weld portion repairing method for repairing a weld portion (122) provided on a nuclear power plant, the method being **characterized in that** it comprises:
determining a weld boundary position (α) on the weld portion (122) using a detection signal of a flaw detection sensor (20A);
setting a flaw detection inspection range (WA) using the flaw detection sensor (20A) with reference to the weld boundary position (α);
inspecting the flaw detection inspection range (WA) using the flaw detection sensor (20A);
setting a repair range (WC) on the repair location subjected to inspection with reference to the weld boundary position (α); and
repairing the repair range (WC).

3. The weld portion repairing method according to claim 2, further comprising:
setting a visual inspection range (WB) using an imaging sensor (20B) with reference to the weld boundary position (α); and
inspecting the visual inspection range (WB) using the imaging sensor (20B).

4. The weld portion repairing method according to any one of claims 1 to 3, wherein the weld portion (122) is a different material weld portion in which different weld materials are joined so as to weld different materials together.

5. A weld portion repairing apparatus for repairing a weld portion (122) provided on a nuclear power plant **characterized in that** it comprises:
an apparatus frame (2) configured to be disposed at a position of the weld portion (122);
a flaw detection sensor (20A) provided on the apparatus frame (2);
a repairing unit (8) provided on the apparatus frame (2) and configured to repair the weld portion (122); and
a control unit (25) configured to control determining a weld boundary position (α) on the weld portion (122) using a detection signal of the flaw detection sensor (20A), setting a repair range (WC) with reference to the weld boundary position (α), and repairing the repair range (WC) using the repairing unit (8).

6. A weld portion repairing apparatus for repairing a weld portion (122) provided on a nuclear power plant **characterized in that** it comprises:
an apparatus frame (2) configured to be disposed at a position of the weld portion (122);
an inspecting unit (20) provided on the apparatus frame (2) and configured to perform flaw detection inspection on the weld portion (122) using a flaw detection sensor (20A);
a repairing unit (8) provided on the apparatus frame (2) and configured to repair a repair location subjected to flaw detection inspection using the inspecting unit (20); and
a control unit (25) configured to control determining a weld boundary position (α) on the weld portion (122) using a detection signal of the flaw detection sensor (20A) of the inspecting unit (20), setting a flaw detection inspection range (WA) using the flaw detection sensor (20A) with reference to weld boundary position (α), subjecting the flaw detection inspection range (WA) to flaw detection inspection using the flaw detection sensor (20A), setting a repair range (WC) on the repair location subjected to flaw detection inspection with reference to the weld boundary position (α), and repairing the repair range (WC) using the repairing unit (8).

7. The weld portion repairing apparatus according to claim 6, wherein
the inspecting unit (20) includes an imaging sensor (20B) configured to perform visual inspection on the weld portion (122), and
the control unit (25) is configured to control setting a visual inspection range (WB) using the imaging sensor (20B) with reference to the weld boundary position (α) and subjecting the visual inspection range (WB) to visual inspection using the imaging sensor (20B).
